(19) **Europäisches Patentamt**
**European Patent Office**
**Office européen des brevets**

(11) **EP 2 874 322 A1**

(12) **EUROPEAN PATENT APPLICATION**
published in accordance with Art. 153(4) EPC

(43) Date of publication:
**20.05.2015 Bulletin 2015/21**

(21) Application number: **13816235.9**

(22) Date of filing: **01.07.2013**

(51) Int Cl.:
*H04B 1/59* (2006.01)    *B60L 3/00* (2006.01)
*B60L 11/18* (2006.01)    *H01Q 3/28* (2006.01)
*H02J 7/00* (2006.01)    *H02J 17/00* (2006.01)
*H04B 1/04* (2006.01)    *H04B 1/40* (2015.01)
*H04B 7/10* (2006.01)

(86) International application number:
**PCT/JP2013/067987**

(87) International publication number:
**WO 2014/010447 (16.01.2014 Gazette 2014/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.07.2012 JP 2012155189**

(71) Applicant: **KABUSHIKI KAISHA TOYOTA
JIDOSHOKKI**
**Kariya-shi, Aichi 448-8671 (JP)**

(72) Inventors:
• **HIRAYAMA, Yuichi**
  **Kariya-shi**
  **Aichi 448-8671 (JP)**

• **HIKA, Koji**
  **Kariya-shi**
  **Aichi 448-8671 (JP)**
• **KATO, Isami**
  **Kariya-shi**
  **Aichi 448-8671 (JP)**
• **INOUE, Junji**
  **Kariya-shi**
  **Aichi 448-8671 (JP)**

(74) Representative: **TBK**
**Bavariaring 4-6**
**80336 München (DE)**

(54) **VEHICLE-MOUNTED COMMUNICATION DEVICE, AND COMMUNICATION METHOD**

(57) An in-vehicle communication device 2 broadcasts an inquiry signal while reducing the transmission output in stages, and when a response signal is received only from a single power feed device 9, automatically performs paring with a feeding-end communication device 10 that the power feed device 9 has.

F I G. 4

EP 2 874 322 A1

**Description**

Technical Field

The present invention relates to a technology of wireless communications.

Background Art

In recent years, non-contact charging systems have been used for battery charging of vehicles such as electric vehicles and plug-in hybrid cars. In the non-contact charging systems, power transmission/reception is performed between a vehicle and a power feed device via a coil by using a battery charge mode such as magnetic resonance charging and electromagnetic induction charging. In the non-contact charging systems, moreover, as a result of making the communication wireless between the vehicle and the power feed device in addition to the power transmission/reception in the battery charging, a cable connection for battery charging and communications becomes unnecessary, which improves convenience compared with contact charging systems.

As a related art, DSRC on-vehicle equipment is provided with a wide-angle antenna having a wide directionality that is oriented upward from a vehicle and a front antenna having a narrow directionality that is oriented toward the front. A technology has been proposed in which the wide-angle antenna or the front antenna is specified as a result of a driver switching a switch for antenna switching provided on a DSRC on-vehicle main body, and the driver receives only necessary signals (Patent Document 1 as an example).

As a related art, an on-board radio device is provided with an antenna that can switch directionality. The on-board radio device fixes the antenna directionality to a low elevation angle directionality when the on-board radio device is communicating with a general roadside device placed at a site other than tollgates. The on-board radio device switches the antenna directionality to a middle elevation angle directionality when the on-board radio device communicates with a roadside device placed at a tollgate. A technology has been proposed in which, as a result, a driver receives necessary signals (Patent Document 2 as an example).

Citation List

Patent Literature

Patent Document 1: Japanese Laid-Open Patent Application Publication No. 2004-304542
Patent Document 2: Japanese Laid-Open Patent Application Publication No. 2011-81784

Summary of the Invention

Technical Problem

It is an object of the present invention to provide an in-vehicle communication device that identifies a power feed device that communicates with a vehicle, and a communication method.

Solution to Problem

One of in-vehicle communication devices disclosed in this description is provided with a transmission/reception unit, a power-adjusting unit, and a controller unit. Here, the transmission/reception unit wirelessly transmits/receives signals. The power-adjusting unit adjusts a level of a transmission output of the signal transmitted from the transmission/reception unit. The controller unit transmits an inquiry signal from the transmission/reception unit to an unspecified number of power feed devices to confirm reception, when a response signal is received from a plurality of power feed devices in response to the inquiry signal, controls the power-adjusting unit and repeatedly transmits the inquiry signal while reducing the level of the transmission output of the inquiry signal in stages, and when the response signal is received from a single power feed device, performs authentication processing to transmit/receive a signal to/from a communication device that the single power feed device has. Advantageous Effects of Invention

The in-vehicle communication device and the communication method disclosed in this description have such an advantageous effect that a power feed device that communicates with a vehicle can be identified.

Brief Description of the Drawings

FIG. 1 is a functional block diagram of an example of a power supply system of Embodiment 1;
FIG. 2 is a hardware configuration example of an example of a communication device;
FIG. 3 is an example of data in the power adjustment table used in setting the transmission power value of an inquiry signal;
FIG. 4 is an explanatory diagram illustrating an example of processing to identify a communication destination in Embodiment 1;
FIG. 5 is an explanatory diagram illustrating an example of display contents of the display device;
FIG. 6 is a flowchart illustrating processing contents to identify a communication destination in Embodiment 1;
FIG. 7 is a functional block diagram of an example of a power supply system of Embodiment 2;
FIG. 8 is an example of data in the power adjustment table used for the setting of the transmission power value of an inquiry signal;
FIG. 9 is an explanatory diagram illustrating an example of processing to identify the communication destination of Embodiment 2;
FIG. 10 is a flowchart that describes the processing contents for identifying a communication destination in Embodiment 2; and
FIG. 11 is a functional block diagram of an example of the power supply system of Embodiment 3.

Description of Embodiments

[Embodiment 1]

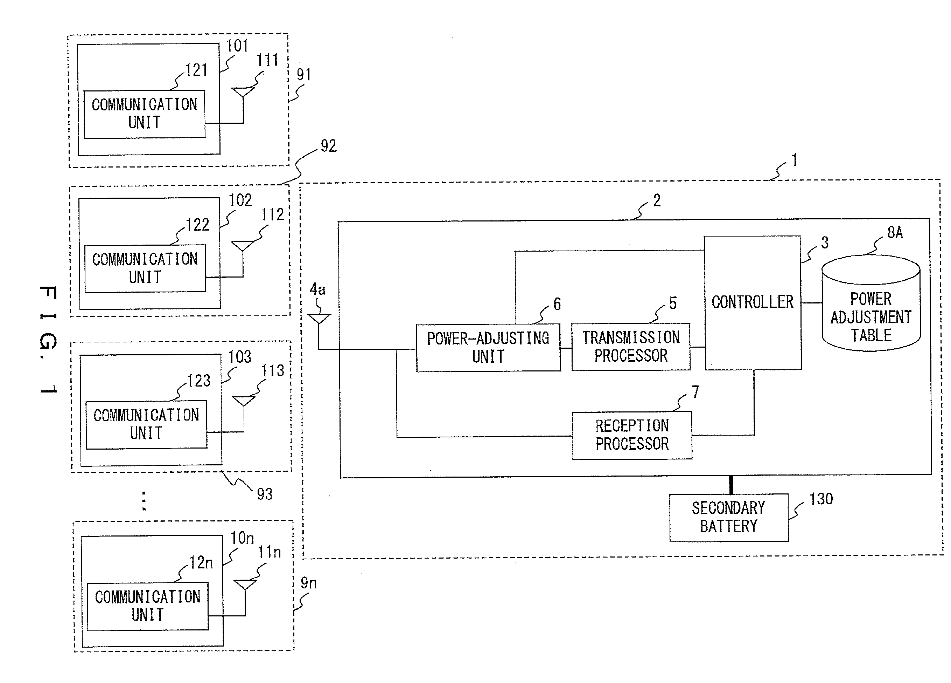

FIG. 1 is explained below.

FIG. 1 is a functional block diagram of an example of a power supply system according to Embodiment 1.

In FIG. 1, a vehicle 1 is an electric vehicle or a plug-in hybrid car as an example and is provided with a secondary battery 130 such as a lithium-ion secondary battery or a nickel-hydrogen secondary battery and an in-vehicle communication device 2 to perform wireless communications. The in-vehicle communication device 2 includes a controller 3, an antenna 4a (transmission/reception unit), a transmission processor 5, a power-adjusting unit 6, a reception processor 7, and a power adjustment table 8A. Power feed devices 91-9n respectively include feeding-end communication devices 101-10n for wireless communications. The feeding-end communication devices 101-10n respectively include antennas 111-11n and communication units 121-12n. It should be noted that in the following descriptions, when any one of the power feed devices 91-9n is referred to, it is referred to as a power feed device 9. When any one of the feeding-end communication devices 101-10n is referred to, it is referred to as a feed-end communication device 10. When any one of the antennas 111-11n is referred to, it is referred to as an antenna 11. When any one of the communication units 121-12n is referred to, it is referred to as a communication unit 12.

Functions of the in-vehicle communication device 2 according to Embodiment 1 are explained below.

The in-vehicle communication device 2 is driven by power supplied from the secondary battery 130. The in-vehicle communication device 2 performs wireless communications between the feeding-end communication devices 101-10n provided in the power feed device 91-9n.

The controller 3 controls the operations of the antenna 4a, the transmission processor 5, the power-adjusting unit 6, and the reception processor 7.

The controller 3 generates an inquiry signal to search for a power feed device 9 that can be communicated and that can provide power feeding from among the power feed devices 91-9n (to confirm whether or not the power feed device 9 can receive a signal transmitted from the antenna 4a), and outputs the signal to the transmission processor 5. As a result, the inquiry signal is input to the antenna 4a through the transmission processor 5 and is broadcast to the power feed devices 91-9n from the antenna 4a.

Moreover, the controller 3 controls the power-adjusting unit 6 on the basis of a value of transmitted output (hereinafter referred to as a transmission output value) of the inquiry signal to be supplied to the antenna 4a, which is stored in the power adjustment table 8A, and causes the power-adjusting unit 6 to adjust the transmission output of the inquiry signal. In the case of Embodiment 1, the controller 3 controls the power-adjusting unit 6 to cause the inquiry signal to be transmitted repeatedly from the antenna 4a to the power feed devices 91-9n while reducing the transmission output of the inquiry signal in stages.

Furthermore, the controller 3 determines whether or not a response signal is received in the antenna 4a. The response signal is a signal transmitted to the vehicle 1 from a power feed device 9 when a feeding-end communication device 10 receives an inquiry signal.

The controller 3, when determining that a response signal is only received from a single power feed device 9, carries out paring (authentication processing) with the power feed device 9 that transmitted the response signal. Regarding the determination of the number of power feed devices 9 that transmitted response signals, for example, an identifier is included in a response signal transmitted from a power feed device 9. The in-vehicle communication device 2 can determine the number of the power feed devices 9 that transmitted response signals on the basis of the type of the identifiers included in the received response signals.

The controller 3 may also carry out a control that involves transmission/reception of signals that are other than the inquiry signal and the response signal and are used for communications with a power feed device 9 or other devices.

The antenna 4a broadcasts the input inquiry signal to the power feed devices 91-9n. The antenna 4a, when receiving a response signal, outputs the received response signal to the reception processor 7. The antenna 4a may be used for transmission/reception of signals that are other than the inquiry signal and the response signal and are used for communications with a power feed device 9 or other devices.

The transmission processor 5 converts digital signals input from the controller 3 into analog signals to be transmitted from the antenna 4a and outputs the signals to the antenna 4a. For example, the transmission processor 5 converts an inquiry signal input from the controller 3 as a digital signal into an analog signal and outputs the converted signal to the antenna 4a.

The transmission processor 5 may encode the digital signal input from the controller 3 before converting the digital signal into an analog signal.

The power-adjusting unit 6 adjusts the transmission output of the signal to be transmitted from the antenna 4a on the basis of a control signal input from the controller 3. For example, the power-adjusting unit 6 adjusts the transmission output of the analog signal input from the transmission processor 5 in response to a control signal request input from the controller 3.

The reception processor 7 converts the analog signal received in the antenna 4a into a digital signal and outputs the signal to the controller 3. For example, the reception processor 7 converts the response signal input from the antenna 4a as an analog signal into a digital signal and processes to output the signal to the controller 3.

When the signal input from the antenna 4a is encoded, the reception processor 7 may convert the analog signal into a digital signal and subsequently decode the digital signal, and the reception processor 7 may output the signal to the controller 3.

The functions of the feeding-end communication device 10 are explained below.

The feeding-end communication device 10 performs wireless communications with the in-vehicle communication device 2 provided in the vehicle 1.

An antenna 11 transmits the response signal input from the communication unit 12 to the vehicle 1. The antenna 11, upon receiving an inquiry signal, outputs the received inquiry signal to the communication unit 12. The antenna 11 may be used for transmission/reception of signals that are other than the inquiry signal and the response signal and are used for communications with the vehicle 1 or other devices.

The communication unit 12 outputs a response signal to the antenna 11 when an inquiry signal is input from the antenna 11. However, the communication unit 12 does not output a response signal to the antenna 11 when the power feed device 9 in which the communication unit 12 itself is installed is in use.

It should be noted that the communication unit 12 may carry out a control that involves transmission/reception of signals that are other than the inquiry signal and the response signal and are used for communications with a power feed device 9 or other devices.

More specifically, the communication unit 12 is provided with a controller, a transmission processor, and a reception processor. The controller in the communication unit 12 generates a response signal as a digital signal and outputs the response signal to the transmission processor. The transmission processor in the communication unit 12 converts the response signal input as a digital signal into an analog signal and outputs the signal to the antenna 11. The reception processor in the communication unit 12 converts an inquiry signal input from the antenna 11 as an analog signal into a digital signal and outputs the signal to the controller in the communication unit 12.

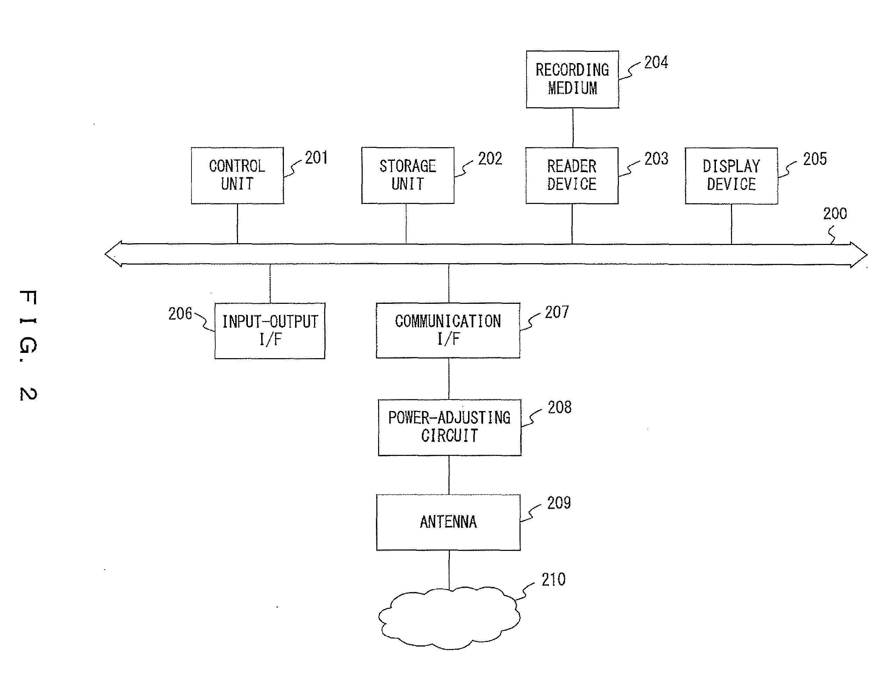

Next, FIG. 2 is explained below.

FIG. 2 is a hardware configuration example of an example of a communication device.

In FIG. 2, a communication device (the in-vehicle communication device 2, and the feeding-end communication device 10) includes a control unit 201, a storage unit 202, a reader device 203, a recording medium 204, a display device 205, an input/output interface 206 (input-output I/F), a communication interface 207 (communication I/F), a power-adjusting circuit 208, and an antenna 209. These components are connected with one another by a bus 200. It should be noted that the controller 201, the storage unit 202, the reader device 203, the recording medium 204, the display device 205, the input/output interface 206 (input-output I/F), and the communication interface 207 (communication I/F) are collectively referred to as a computer.

The controller 201 controls the entirety of the communication device. The controller 201 in the in-vehicle communication device 2 acts as the controller 3 in FIG. 1. The controller 201 in the feeding-end communication device 10

4

acts as the controller in the communication unit 12 in FIG. 1. The controller 201 can be a CPU, a multicore CPU, an FPGA (Field Programmable Gate Array), or a PLD (Programmable Logic Device), for example.

The storage unit 202 can be a memory such as ROM (Read Only Memory) and RAM (Random Access Memory) or an HD (Hard Disk), for example. ROM stores programs such as a boot program. RAM is used as a work area of the controller 201. An HD stores an OS (Operating System), application programs, programs such as firmware, and various sorts of data. The storage unit 202 in the in-vehicle communication device 2 stores the power adjustment table 8A in FIG. 1. The power adjustment table 8A may be stored not only in the storage unit 202 in the in-vehicle communication device 2 but also in the other storage units provided in the vehicle 1 or in a server on a network 210 connected through the communication interface 207 as long as the controller 201 in the in-vehicle communication device 2 is accessible to the other storage units or the server.

Moreover, a communication control program may be stored in the storage unit 202 in the in-vehicle communication device 2. When a communication control is started, the controller 201 in the in-vehicle communication device 2 reads out the communication control program to RAM. As a result, the controller 201 in the in-vehicle communication device 2 acts as a controller 3 by using RAM as a work space. It should be noted that the communication control program may be stored not only in the storage unit 202 in the in-vehicle communication device 2 but also in the other storage units provided in the vehicle 1 or in a server on a network 210 connected through the communication interface 207 as long as the controller 201 in the in-vehicle communication device 2 is accessible to the other storage units or the server.

Furthermore, a communication control program may be stored in the storage unit 202 in the feeding-end communication device 10. When a communication control is started, the controller 201 in the feeding-end communication device 10 reads out the communication control program to RAM. As a result, the controller 201 in the feeding-end communication device 10 acts as a controller in the communication device 12 by using RAM as a work space. It should be noted that the communication control program may be stored not only in the storage unit 202 in the feeding-end communication device 10 but also in the other storage units provided in the power feed device 9 or in a server on a network 210 connected through the communication interface 207 as long as the controller 201 in the feeding-end communication device 10 is accessible to the other storage units or the server.

When the storage unit 202 is an HD, the storage unit is connected to the bus 200 via an HDD (Hard Disk Drive), and data read/write is performed as a result of the HDD being controlled by the controller 201.

The reader device 203 is controlled by the controller 201 and performs read/write of data in a removable recording medium 204. The reader device 203 in the in-vehicle communication device 2 may read out the communication control program recorded in the recording medium 204 and store the program in the storage unit 202 in the in-vehicle communication device 2. The reader device 203 in the feeding-end communication device 10 may read out the communication control program recorded in the recording medium 204 and store the program in the storage unit 202 in the feeding-end communication device 10. The reader device 203 can be a FDD (Floppy Disk Drive), a CDD (Compact Disc Drive), a DVDD (Digital Versatile Disk Drive), a BDD (Blu-ray Disk Drive: Registered Trademark), or a USB (Universal Serial Bus), for example.

The recording medium 204 stores various sorts of data. The recording medium 204 is connected to the bus 200 via the reader device 203, and data read/write is performed as a result of the controller 201 controlling the reader device 203. A charge control program may be stored in the recording medium 204. The recording medium 204 can be a FD (Floppy Disk), a CD (Compact Disc), a DVD (Digital Versatile Disk), a BD (Blu-ray Disk: Registered Trademark), or a flash memory, for example.

The display device 205 is connected to the bus 200 and displays various information as being controlled by the controller 201. The display device 205 can be a CRT (Cathode Ray Tube), an LCD (Liquid Crystal Display), a PDP (Plasma Display Panel), or an OELD (Organic Electroluminescence Display), for example.

The input/output interface 206 can be connected to a keyboard, a mouse, a touch panel, a scanner, or a printer, for example, receives information input into the connected devices, and outputs the information to the controller 201 via the bus 200. The input/output interface 206, when the information output from the controller 201 is input via the bus 200, outputs the information to the various connected devices.

The communication interface 207 connects a communication device with another device in a communicatable manner via a network 210 such as power line communication, a LAN (Local Area Network), wireless communication, or the Internet. The communication interface 207 in the in-vehicle communication device 2 acts as the transmission processor 5 and the reception processor 7 in FIG. 1. The communication interface 207 in the feeding-end communication device 10 acts as the transmission processor and the reception processor in the communication unit 12 in FIG. 1. The communication interface 207 can be a modem or a LAN adapter, for example.

The power-adjusting circuit 208 adjusts the transmission output of the analog signal input from the controller 201 via the communication interface 207 and outputs the analog signal to the antenna 209. The power-adjusting circuit 208 acts as the power-adjusting unit 6 in FIG. 1. The power-adjusting circuit 208 can be an amplifier circuit that can change an amplification factor, for an example.

The antenna 209 transmits and receives wireless signals. The antenna 209 in the in-vehicle communication device 2 acts as the antenna 4a in FIG. 1. The antenna 209 in the feeding-end communication device 10 acts as the antenna 11 in FIG. 1. The antenna 209 includes any one or more of a non-directional antenna such as a whip antenna, a directional antenna such as a dipole antenna, and a directivity switchable antenna such as an array antenna (Registered Trademark). Instead of the antenna 4a in the in-vehicle communication device 2, a coil provided in the vehicle 1 may be used as the antenna 4a.

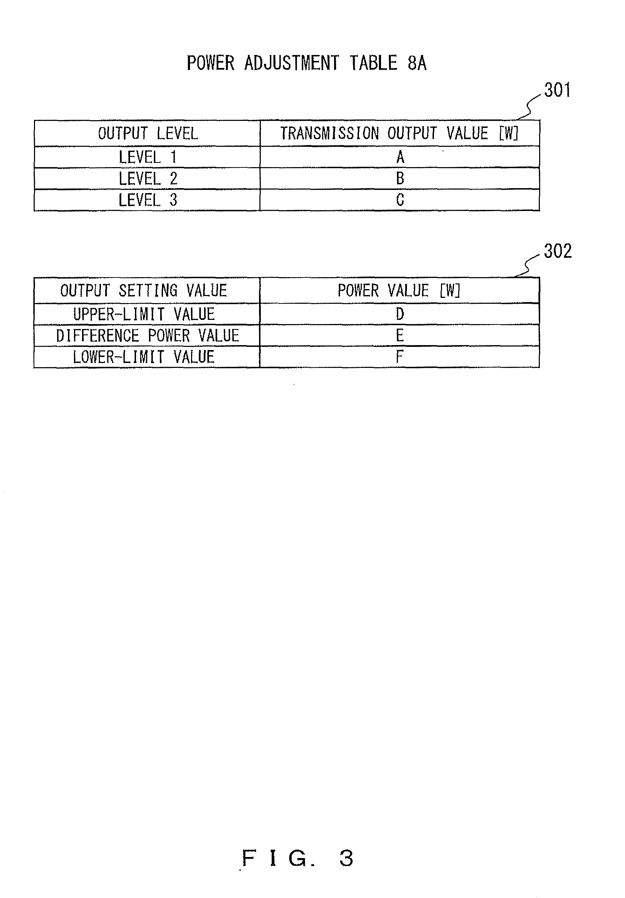

FIG. 3 is explained below.

FIG. 3 is an example of data in the power adjustment table used in setting the transmission power value of an inquiry signal.

The power adjustment table 8A according to Embodiment 1 is explained.

The power adjustment table 8A depicted in FIG. 3 stores three output levels and transmission output values [W] ([W] is omitted hereafter) corresponding to the respective output levels as provided in the power adjustment table 301 as an example. The number of output levels is not limited to three, but any number of output levels that is two or larger may be stored. The output levels and the transmission output values corresponding to the output levels are arbitrarily set by a user.

An output level is an identifier to identify a transmission output value stored in the power adjustment table 301. In the power adjustment table 301, LEVEL 1, LEVEL 2, and LEVEL 3 are set as output levels.

The transmission output value is a value output to the power-adjusting unit 6 as an output of the inquiry signal when the controller 3 selects an output level. When a transmission output value is input, the power-adjusting unit 6 sets the power of the inquiry signal input from the transmission processor 5 to be the input transmission output value and outputs it to the antenna 4a. In the following descriptions, the transmission output values are set so that the values are $A[W] < B[W] < C[W]$.

Another example of the power adjustment table 8A is that output setting values and power values [W] ([W] is omitted hereafter) may be stored as provided in the power adjustment table 302. The power values that respectively correspond to the output setting values are arbitrarily set by a user.

An output setting value is an identifier to identify a power value stored in the power adjustment table 302. An upper-limit value is an identifier corresponding to the power value at the time of maximum output of the transmission output values. A difference power value indicates a difference between the original transmission output value and the changed transmission output value when the output level of the transmission output value is changed by one level. A lower-limit value is an identifier corresponding to the power value at the time of minimum output of the transmission output values.

The power value is a power value corresponding to each output setting value. In the power adjustment table 302 in FIG. 3, $D[W]$, $E[W]$, and $F[W]$ are set to the power values.

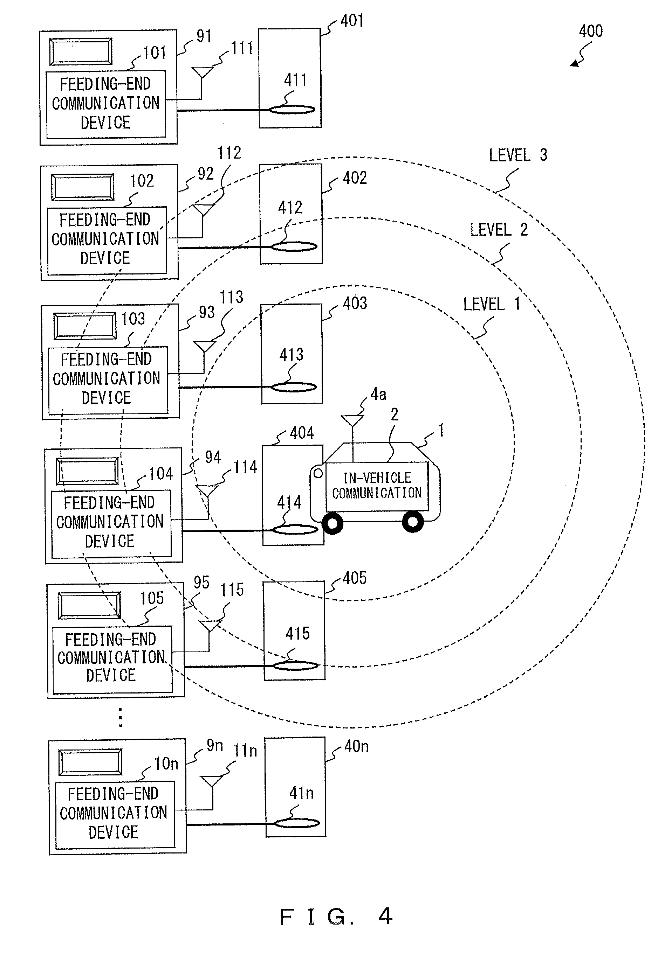

FIG. 4 is explained below.

FIG. 4 is an explanatory diagram illustrating an example of processing to identify a communication destination in Embodiment 1.

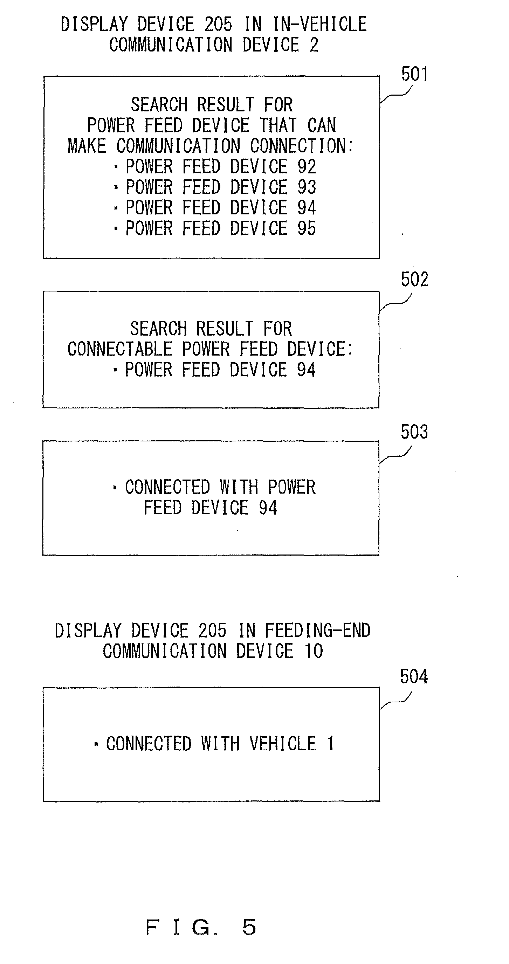

FIG. 5 is explained below.

FIG. 5 is an explanatory diagram illustrating an example of display contents of the display device.

In the following descriptions, an explanation is given under the assumption that in FIG. 4, the antenna 4a is a non-directional antenna, and the power adjustment table 8A stores the values in the power adjustment table 301 in FIG. 3. It should be noted that although the antenna 4a is illustrated separately from the in-vehicle communication device 2, it is included in the in-vehicle communication device 2. Although the antennas 111-11n are illustrated separately from the feeding-end communication devices 101-10n, they are respectively included in the feeding-end communication devices 101-10n.

In a power feed facility 400, plural power feed devices 9 are provided. The power feed areas 401-40n in FIG. 4 are respectively provided at each power feed device 9 and are locations where the vehicle 1 is parked when the secondary battery 130 in the vehicle 1 is to be recharged by a non-contact charger. Coils 411-41n in FIG. 4 are coils to perform non-contact power transmission/reception and communication signal transmission/reception with coils (not illustrated) provided in the vehicle 1. In the following descriptions, when any one of the power feed areas 401-40n is referred to, it is referred to as a power feed area 40. When any one of the coils 411-41n is referred to, it is referred to as a coil 41.

The in-vehicle communication device 2 in the vehicle 1, when entering the power feed facility 400, broadcasts an inquiry signal of transmission output C [W] corresponding to the transmission output value at LEVEL 3 from the antenna 4a of the in-vehicle communication device 2. At that time, the antennas 112-115 located within a range (hereinafter referred to as a communication area) indicated by a dotted line for LEVEL 3 in FIG. 4 receive the inquiry signal transmitted from the in-vehicle communication device 2. Then, the feeding-end communication devices 102-105 each transmit to the in-vehicle communication device 2 a response signal including an identifier of respective power feed devices 92-95 to which the feeding-end communication devices 102-105 belong. As a result, the in-vehicle communication device 2 receives a response signal transmitted from the power feed devices 92-95. The in-vehicle communication device 2 reads the identifier included in the response signal and determines the power feed devices 92-95 that are a transmission source of the response signal. The in-vehicle communication device 2 displays the power feed devices 92-95 being connectable for communication as illustrated on a display screen 501 in FIG. 5 on the display device 205 of the in-vehicle communication device 2 (or can be on a display device mounted on the vehicle 1).

Next, the in-vehicle communication device 2 broadcasts the inquiry signal of the transmission output corresponding to the transmission output value at LEVEL 2 from the antenna 4a. At that time, the antennas 113-115 located within the communication area of LEVEL 2 illustrated in FIG. 4 receive the inquiry signal. Then, the feeding-end communication devices 103-105 each transmit to the in-vehicle communication device 2 a response signal including an identifier of respective power feed devices 93-95 to which the feeding-end communication devices 103-105 belong. As a result, the in-vehicle communication device 2 receives a response signal transmitted from the power feed devices 93-95. The in-vehicle communication device 2 reads the identifier included in the response signal and determines the power feed devices 93-95 that are a transmission source of the response signal. The in-vehicle communication device 2 displays the power feed devices 93-95 being connectable for communication on the display device 205 of the in-vehicle communication device 2.

Furthermore, the in-vehicle communication device 2 broadcasts the inquiry signal of the transmission output corresponding to the transmission output value at LEVEL 1 from the antenna 4a. At that time, the antenna 114 located within the communication area of LEVEL 1 illustrated in FIG. 4 receives the inquiry signal. Then, the feeding-end communication device 104 transmits to the in-vehicle communication device 2 a response signal including an identifier of the power feed device 94 to which the feeding-end communication device 104 belongs. As a result, the in-vehicle communication device 2 only receives a response signal transmitted from the power feed device 94. The in-vehicle communication device 2 displays the power feed device 94 being connectable for communication on the display device 205 of the in-vehicle communication device 2 as illustrated in a display screen 502 in FIG. 5.

The in-vehicle communication device 2 identifies the feeding-end communication device 104 as a communication destination and performs paring. At that time the power feed device 94 that communicates with the vehicle 1 is displayed on a display screen of the display device 205 in the in-vehicle communication device 2 in a manner described on a display screen 503. In addition, a display screen 504 may be displayed on the display screen of the display device 205 of the feeding-end communication device 10 of the power feed device 94 to indicate that communication is established with the vehicle 1.

As described above, the in-vehicle communication device 2 reduces the transmission output of the inquiry signals transmitted to each feeding-end communication device 10 in a stage-by-stage manner (gradually) until there is only one feeding-end communication device 10 that transmits a response signal in response to the inquiry signal. The in-vehicle communication device 2 performs pairing with the feeding-end communication device 10 when there is only one feeding-end communication device 10 that returns a response signal.

Moreover, the in-vehicle communication device 2 displays an identification number (read out from the identifier included in the response signal) of the power feed device 9 to which the paired feeding-end communication device 10 belongs on the display device 205 of the in-vehicle communication device 2. As a result, the in-vehicle communication device 2 guides a user to the power feed device 9 to which the paired feeding-end communication device 10 belongs. The user moves the vehicle 1 to a location of the power feed device 9 displayed on the display device 205 of the in-vehicle communication device 2 so that the secondary battery 130 provided in the vehicle 1 can be charged at the power feed device 9 being connectable for communication.

Even if the feeding-end communication device 10 is located within a range in which the inquiry signal from the in-vehicle communication device 2 can be received, the feeding-end communication device 10 may not return a response signal to the in-vehicle communication device 2 when the power feed device 9 to which the feeding-end communication device 10 belongs is in use. Consequently, only the response signals from the power feed devices 9 being connectable for communication with the vehicle 1 are received and only the power feed devices 9 being connectable for communication with the vehicle 1 can be reported.

In a processing stage in which the in-vehicle communication device 2 identifies a feeding-end communication device 10 as a communication destination, plural power feed devices 9 that can connect for communication with the vehicle 1 are displayed on the display device 205 of the in-vehicle communication device 2. At that time, the user may select a communication destination feeding-end communication device 10 from among the power feed devices 9 displayed on the display device 205 of the in-vehicle communication device 2. The in-vehicle communication device 2 performs paring of the in-vehicle communication device 2 of the vehicle 1 and the feeding-end communication device 10 that the selected power feed device 9 has. As a result, a power feed device 9 to be connected for communication is selected by a user's decision from among the plural power feed devices 9 being connectable for communication with the vehicle 1. It should be noted that this is the same in Embodiment 2 and Embodiment 3 explained below. When a configuration to have a user select a communication destination power feed device 9 is omitted, the in-vehicle communication device 2 does not have to display the display screen 501.

When the vehicle 1 is not located within a range (hereinafter referred to as a communication area) to which a response signal transmitted from the feeding-end communication device 10 of each power feed device 9 can reach, no response signal is received in the in-vehicle communication device 2 in the vehicle 1. Accordingly, a power feed device 9 that does not have the vehicle 1 located in its signal communication area is not recognized by the in-vehicle communication device 2 as a power feed device 9 being connectable for communication.

In addition, when a value indicated in the power adjustment table 302 in FIG. 3 is stored in the power adjustment table 8A, a power feed device 9 being connectable for communication may be identified by reducing the transmission output of the inquiry signal in stages by using the following equation (1).

$$\text{upper value} - n(\text{difference power value}) = \text{transmission output}$$
$$(n=1,\ 2,\ 3,\ \dots) \qquad\qquad (1)$$

If it is possible to transmit an inquiry signal to an unspecified number of power feed devices 9 while the level of the transmission output is being reduced in stages, the transmission output value of the inquiry signal may be changed by methods other than using the power adjustment table 8A described in FIG. 3.

In the determination of whether or not a response signal is received in the in-vehicle communication device 2 in the vehicle 1, a response signal is accepted only within a certain time period from transmission of an inquiry signal, for example. When there is only one power feed device 9 that has returned a response signal after the certain time period has elapsed, the in-vehicle communication device 2 performs paring with the power feed device 9. If the number of the power feed devices 9 that returned response signals is not one after the certain time period has elapsed, the in-vehicle communication device 2 transmits (broadcasts) an inquiry signal that has a smaller transmission output than that of the inquiry signal transmitted previously to an unspecified number of power feed devices 9. It should be noted that for a method to measure the certain time period in the in-vehicle communication device 2 in the vehicle 1, a time of a CPU clock of the controller 201 in the in-vehicle communication device 2 may be measured or timer means such as a counter circuit may be included separately. This is the same in Embodiment 2 and Embodiment 3 described later.

It should be noted that for the pairing, any proper methods may be used as long as two-way authentication such as a three-way handshake can be carried out. This is the same in Embodiment 2 and Embodiment 3 described later.

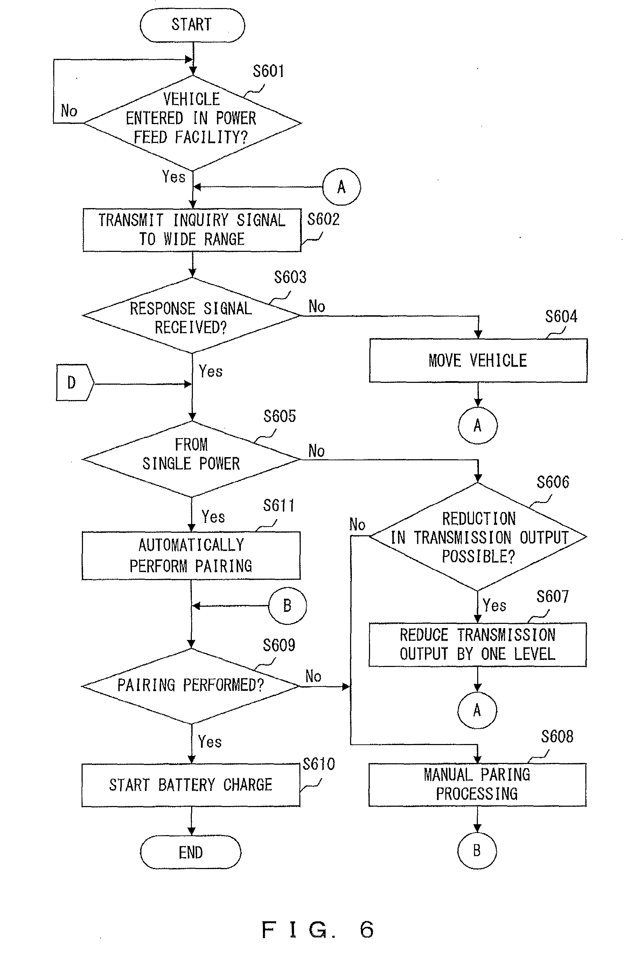

FIG. 6 is explained below.

FIG. 6 is a flowchart illustrating processing contents to identify a communication destination in Embodiment 1.

The flowchart in FIG. 6 illustrates processing to identify a communication designation explained by using FIG. 4. In the following descriptions, an explanation is provided with reference to FIG. 5. In the following description, the explanation is provided under the assumption that the antenna 4a is a non-directional antenna, and that the power adjustment table 8A stores value in the power adjustment table 301 in FIG. 3.

First, the in-vehicle communication device 2 of the vehicle 1 determines whether or not the vehicle 1 entered the power feed facility 400 (S601). The in-vehicle communication device 2 repeats the processing in S601 until it determines that the vehicle 1 entered the power feed facility 400 (No in S601).

The in-vehicle communication device 2 determines that the vehicle 1 entered the power feed facility 400 (Yes in S601) when an instruction to start processing to identify a communication destination is input by a user through the input/output interface 206 of the in-vehicle communication device 2 for example, and broadcasts an inquiry signal (S602). At that time, the transmission output of the inquiry signal is set to be LEVEL 3, and the inquiry signal is transmitted in a wide range. It should be noted that in the processing in S601, an infrared transmitter is placed near the entrance of the power feed facility 400 for example, and an infrared receiver is provided in the vehicle 1. The in-vehicle communication device 2 may determine that the vehicle 1 entered the power feed facility 400 when the vehicle 1 receives a signal indicating that it entered the power feed facility 400 from the infrared receiver. The method is not limited to the above method, but methods of using various sensors may be properly selected as long as it is possible to determine that the vehicle 1 entered the power feed facility 400.

The in-vehicle communication device 2 determines whether or not a response signal transmitted from the power feed device 9 is received (S603). When the in-vehicle communication device 2 determines that no response signal transmitted from the power feed device 9 is received (No in S603), after the user moves the vehicle 1 in a direction of each power feed device 9 (S604), the in-vehicle communication device 2 performs the processing in S602. Moving of the vehicle 1 by the user is arbitrarily performed by the user during the processing to identify a communication destination illustrated in FIG. 6.

The in-vehicle communication device 2, when it has determined that a response signal transmitted from the power feed device 9 is received (Yes in S603), determines whether or not a response signal is only received from a single power feed device 9 (S605). The in-vehicle communication device 2, when it has determined that response signals are received from plural power feed devices 9 (No in S605), determines whether or not the transmission output of the inquiry signal can be reduced (S606). When the transmission output of the inquiry signal transmitted previously is LEVEL 3 or LEVEL 2 and the transmission output can be reduced (Yes in S606), the transmission output is reduced by one level (S607), and the processing in S602 is performed.

When the transmission output of the inquiry signal transmitted previously is at LEVEL 1, and the transmission output cannot be reduced (No in S606), the paring processing is executed manually (S608). For example, when an inquiry signal having a transmission output of LEVEL 1 is transmitted, and when response signals are received in the in-vehicle communication device 2 from plural power feed devices 9, the plural power feed devices 9 being connectable for communication are displayed on the display screen of the display device 205 of the in-vehicle communication device 2 as illustrated on the display screen 501. The user selects a power feed device 9 to be connected for communication from among the plural power feed devices 9 displayed on the display device 205 of the in-vehicle communication device 2. As a result, the in-vehicle communication device 2 performs the paring processing with an arbitrary feeding-end communication device 10.

The in-vehicle communication device 2 determines whether or not the pairing with the selected feeding-end communication device 10 has been completed (S609). The in-vehicle communication device 2, when it has determined that the paring with the selected feeding-end communication device 10 has not been successful (S609), executes the processing in S608 and causes the user to select a power feed device 9 that is different from the power feed device 9 selected previously. It should be noted that when the in-vehicle communication device 2 is not successful in pairing with any of the power feed devices 9 being connectable for communication with the in-vehicle communication device 2, the in-vehicle communication device 2 may terminate the processing because communication connection is impossible, or may perform the processing in S604 once again. A possible cause of not being able to succeed in the paring with the power feed device 9 displayed on the display screen 501 may be a situation in which a signal from the vehicle 1 that requests the paring with the power feed device 9 is excluded because the selected power feed device 9 has already been successful in the paring with another vehicle.

The in-vehicle communication device 2, when it has determined that the paring with the feeding-end communication device 10 of the selected power feed device 9 is successful (Yes in S609), displays an identification number of the power feed device 9 that has the feeding-end communication device 10 that succeeded in the paring (hereinafter referred to as paired power feed device 9) on the display device 205. As a result, the user is guided to the paired power feed device 9. Afterwards, the vehicle 1 is moved to the power feed area 40 of the paired power feed device 9 and a signal indicating the start of battery charging of the secondary battery 130 in the vehicle 1 is transmitted to the paired power feed device 9 (S610). Consequently, the battery charging of the secondary battery 130 in the vehicle 1 is started. During the battery charging, signals including information necessary for controlling the battery charging are transmitted/received between the in-vehicle communication device 2 and the paired feeding-end communication device 10.

In S605, the in-vehicle communication device 2, when it determines that a response signal is only received from a single power feed device 9 (Yes in S605), selects performing of the paring with the feeding-end communication device 10 of the power feed device 9 that transmitted the response signal (S611). Afterwards, the processing moves on to S609.

The in-vehicle communication device 2 explained in Embodiment 1 broadcasts an inquiry signal while reducing the transmission output in stages, and when a response signal is only received from a single power feed device 9, the pairing with the feeding-end communication device 10 in the power feed device 9 is automatically performed. As a result, the in-vehicle communication device 2 can automatically identify a power feed device 9 that is located closest to the vehicle 1 from among the power feed devices 9 being connectable for communication as the power feed device 9 of the communication destination and can perform the paring.

In addition, because the in-vehicle communication device 2 explained in Embodiment 1 automatically identifies a power feed device 9 that is located closest to the vehicle 1 from among the power feed devices 9 being connectable for communication as the power feed device 9 of the communication destination, it is possible to make a one-to-one correspondence between plural power feed devices 9 and plural vehicles 1.

[Embodiment 2]

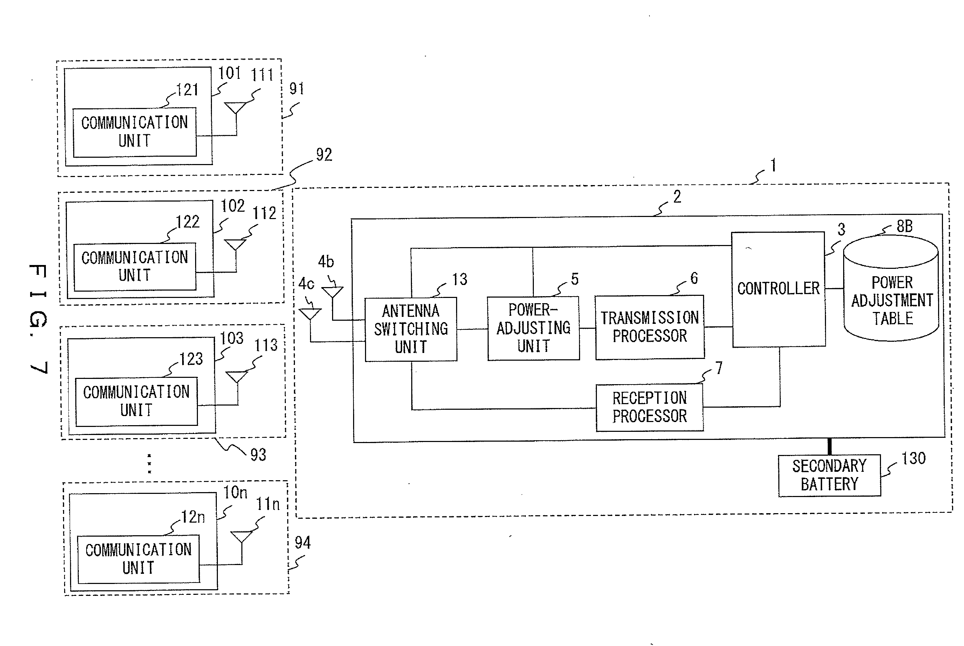

FIG. 7 is explained below.

FIG. 7 is a functional block diagram of an example of a power supply system of Embodiment 2.

In FIG. 7, features that are the same as those of the in-vehicle communication device 2 according to Embodiment 1 explained in FIG. 1 are assigned the same reference codes and their explanations are omitted. In FIG. 7, because the features of the feeding-end communication devices 101-10n according to Embodiment 2 are the same as the features of the feeding-end communication devices 101-10n according to Embodiment 1 explained in FIG. 1, the same reference codes are assigned and their explanations are omitted.

Features of the in-vehicle communication device 2 according to Embodiment 2 are explained below.

In the in-vehicle communication device 2 according to Embodiment 2, a non-directional antenna 4b and an antenna 4c having directionality are provided instead of the antenna 4a of the in-vehicle communication device 2 according to Embodiment 1. In addition, the in-vehicle communication device 2 according to Embodiment 2 has an antenna switching unit 13 that switches an antenna used for transmission/reception of signals between the antenna 4b and the antenna 4c.

The antenna 4b is a non-directional antenna and broadcasts an inquiry signal input from the power-adjusting unit 6 toward the power feed devices 91-9n. The antenna 4b, when receiving a response signal, outputs the received response signal to the reception processor 7. It should be noted that the antenna 4b may be used for transmission/reception of signals that are other than the inquiry signal and the response signal and are used for communications with a power feed device 9 or other devices.

The antenna 4c is an antenna having directionality, and is placed so that the directionality is directed to a direction of travel of the vehicle 1. As an example, an antenna that has a main lobe and a back lobe may be used for the antenna 4c. The antenna 4c may be placed so that the main lobe is oriented toward the front of the vehicle 1. Consequently, when the vehicle 1 moves forward, the directionality of the antenna 4c in the direction of travel can be ensured by the main lobe. When the vehicle 1 moves backward, the directionality of the antenna 4c in the direction of travel can be ensured by the back lobe.

A directionality equivalent to the direction of travel when the vehicle 1 moves forward can be given to the direction of travel when the vehicle 1 moves backward by using a bidirectional antenna for the antenna 4c.

The directionality of the antenna 4c is not limited to the direction of travel of the vehicle 1, but can be set toward to any direction desired by the user.

In order to simplify the explanation, the following descriptions assume that the direction that the vehicle 1 travels is a forward direction. The directionality of the antenna 4c is directed forward.

The antenna 4c broadcasts the inquiry signal input from the power-adjusting unit 6 to the power feed devices 91-9n. The antenna 4c, in addition, when receiving a response signal, outputs the received response signal to the reception processor 7. It should be noted that the antenna 4c may be used for transmission/reception of signals that are other than the inquiry signal and the response signal and that are used for communications with a power feed device 9 or other devices.

The antenna switching unit 13 switches the antenna used for transmission/reception of signals between the antenna 4b and the antenna 4c.

FIG. 2 is explained below.

FIG. 2 is an example of a hardware configuration of an example of a communication device.

The hardware configuration of the example of the in-vehicle communication device 2 of Embodiment 2 is different from the hardware configuration of the communication device of Embodiment 1 only in the antenna 209. Accordingly, only the antenna 209 is explained, and the other explanations are omitted.

The antenna 209 in the in-vehicle communication device 2 has a directional antenna, a non-directional antenna, and a switching circuit that switches between the use of the directional antenna and that of the non-directional antenna. As a result, the antenna 209 in the in-vehicle communication device 2 transmits/receives a wireless signal by switching between a non-directional antenna and an antenna having directionality, and the antenna 209 of the in-vehicle communication device 2 of Embodiment 2 functions as the antenna 4b, the antenna 4c, and the antenna switching unit 13 in FIG. 7. Instead of the antenna 4b in the in-vehicle communication device 2, the coil provided in the vehicle 1 may be used as the antenna 4b.

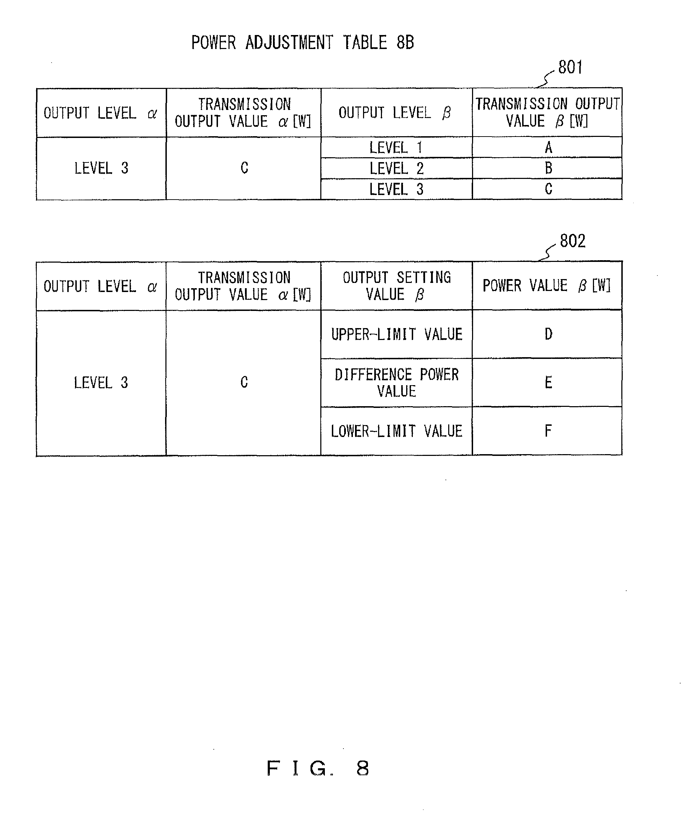

FIG. 8 is explained below.

FIG. 8 is an example of data in the power adjustment table used for the setting of the transmission power value of an inquiry signal.

The power adjustment table 8B provided in FIG. 8 stores an output level $\alpha$ of the non-directional antenna 4b and the transmission output value $\alpha[W]$ ([W] is omitted hereafter) corresponding to the output level $\alpha$, for example, as described in the power adjustment table 801. It should be noted that the transmission output value $\alpha$ that corresponds to the output level is arbitrarily set by a user.

The output level $\alpha$ is an identifier to identify the transmission output value $\alpha$ of the antenna 4b stored in the power adjustment table 801. In the power adjustment table 801, LEVEL 3 is set as the output level $\alpha$.

The transmission output value $\alpha$ is a value output to the power-adjusting unit 6 as an output of the inquiry signal when the controller 3 sets the output level $\alpha$ to LEVEL 3. It should be noted that when a transmission output value $\alpha$ is input, the power-adjusting unit 6 sets the power of the inquiry signal input from the transmission processor 5 to be the input transmission output value $\alpha$ and outputs it to the antenna 4b. In the power adjustment table 801, C[W] is set as the transmission output value $\alpha$.

Furthermore, the power adjustment table 8B provided stores three output levels $\beta$ of the directional antenna 4c and the transmission output values $\beta[W]$ ([W] is omitted hereafter) respectively corresponding to the output level $\beta$, for example, as described in the power adjustment table 801. It should be noted that the output level $\beta$ is not limited to three levels, but any number of levels that is two or more may be stored. The output level $\beta$ and the transmission output value $\beta$ corresponding to the output level $\beta$ are arbitrarily set by a user.

The output level $\beta$ is an identifier to identify the transmission output value $\beta$ stored in the power adjustment table 801. In the power adjustment table 801, LEVEL1, LEVEL 2, and LEVEL 3 are set as the output level $\beta$.

The transmission output value β is a value output to the power-adjusting unit 6 as an output of the inquiry signal when the controller 3 selects an output level β. It should be noted that when a transmission output value β is input, the power-adjusting unit 6 sets the power of the inquiry signal input from the transmission processor 5 to be the input transmission output value β and outputs it to the antenna 4c. The following explanation assumes that the values of the transmission output value β are set to be A[W]<B[W]<C[W].

As another example of the power adjustment table 8B, the output setting value β and the power value β[W] ([W] is omitted hereafter) may be set as in the power adjustment table 802 instead of the output level β and the transmission output value β in the power adjustment table 801. The power values β that respectively correspond to the output setting values β are arbitrarily set by the user.

The output setting value β is identifiers to identify the power values β stored in the power adjustment table 802. An upper-limit value is an identifier corresponding to the power value at the time of the maximum output of the transmission output value β. A difference power value indicates a power value of the difference between the original transmission output value β and the changed transmission output value β when the output level of the transmission output value β changes by one level. A lower-limit value is an identifier corresponding to the power value at the time of the minimum output of the transmission output value β.

The power value β is a power value that correspond to the output setting value β. It should be noted that in the power adjustment table 802 of FIG. 8, D[W], E[W], and F [W] are set to the power value β.

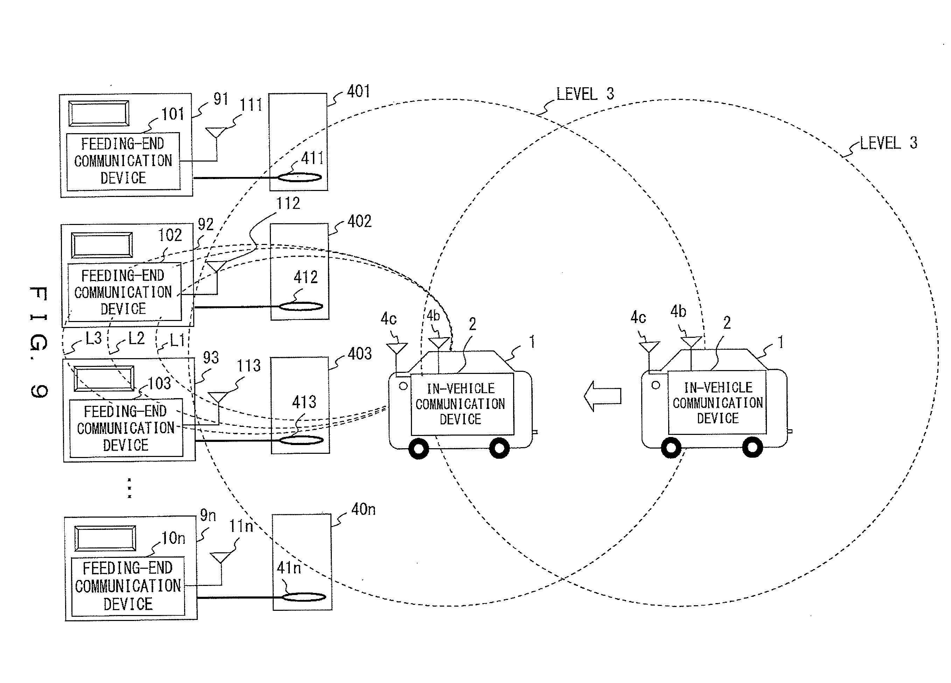

FIG. 9 is explained below.

FIG. 9 is an explanatory diagram illustrating an example of processing to identify the communication destination of Embodiment 2.

In the following descriptions, the explanation is provided under the assumption that the antenna 4b is a non-directional antenna, the antenna 4c is an antenna having directionality, and the power adjustment table 8B stores values in the power adjustment table 801 in FIG. 8. In FIG. 9, the configurations that are the same as the configurations in Embodiment 1 explained in FIG. 4 are assigned the same reference codes and the explanations are omitted. The vehicle 1 is assumed to be located within the communication area of the antennas 111-11n.

The in-vehicle communication device 2 of the vehicle 1, when it starts the processing for identifying a communication destination, broadcasts an inquiry signal of the transmission output value C[W] corresponding to the transmission output value α at LEVEL 3 from the antenna 4b of the in-vehicle communication device 2. At that time, the antennas 112 and 113 located within the communication area of LEVEL 3 illustrated in FIG. 9 receive the inquiry signal transmitted from the in-vehicle communication device 2. Then, the feeding-end communication devices 102 and 103 transmit responses signals to the in-vehicle communication device 2. As a result, the in-vehicle communication device 2 receives the response signals transmitted form the power feed devices 92 and 93. Then, the in-vehicle communication device 2 determines that the vehicle 1 entered the power feed facility 400.

The in-vehicle communication device 2 reads the identifiers in the response signals and determines that the transmission source of the response signals are the power feed devices 92 and 93. Then the in-vehicle communication device 2 determines that the power feed devices 92 and 93 allow communications and displays the power feed devices 92 and 93 that are connectable for communication on the display device 205 of the in-vehicle communication device 2 (the display may be performed on a display device mounted on the vehicle 1).

When it has determined that the vehicle 1 entered the power feed facility 400, the in-vehicle communication device 2 switches the antenna to be used to the antenna 4c. Then, an inquiry signal of the transmission output C[W] corresponding to the transmission output value β at LEVEL 3 is broadcast from the antenna 4c. At that time, the antennas 112 and 113 located within the communication area of L3 illustrated in FIG. 9 receive an inquiry signal transmitted from the in-vehicle communication device 2. The feeding-end communication device 102 and 103 transmit response signals to the in-vehicle communication device 2. As a result, the in-vehicle communication device 2 receives the response signals transmitted from the power feed devices 92 and 93. Then, the in-vehicle communication device 2 reads identifiers included in the response signals and determines that the power feed devices 92 and 93 that are the transmission sources of the response signals are the power feed devices being connectable for communication. The in-vehicle communication device 2 displays the power feed devices 92 and 93 that are connectable for communication on the display device 205 of the in-vehicle communication device 2.

Next, the in-vehicle communication device 2 broadcasts an inquiry signal of the transmission output B[W] corresponding to the transmission output value β at LEVEL 2 from the antenna 4c. At that time, the antennas 112 and 113 in the communication area of L2 illustrated in FIG. 9 receive the inquiry signal transmitted from the in-vehicle communication device 2. Then, the feeding-end communication devices 102 and 103 transmits response signals to the in-vehicle communication device 2. As a result, the in-vehicle communication device 2 receives the response signals transmitted from the power feed devices 92 and 93. The in-vehicle communication device 2 reads an identifier included in the response signals and determines that the power feed devices 92 and 93 that are the transmission sources of the response signals are power feed devices being connectable for communication. The in-vehicle communication device 2 also displays the power feed devices 92 and 93 being connectable for communication on the display device 205 of the in-vehicle communication device 2.

Furthermore, the in-vehicle communication device 2 broadcasts an inquiry signal of the transmission output A[W] corresponding to the transmission output value β at LEVEL 1 from the antenna 4c. At that time, the antenna 113 located within the communication area of L1 illustrated in FIG. 9 receives the inquiry signal transmitted from the in-vehicle communication device 2. The feeding-end communication device 103 transmits a response signal to the in-vehicle communication device 2. As a result, the in-vehicle communication device 2 receives the response signal transmitted from the power feed device 93. The in-vehicle communication device 2 reads an identifier included in the response signal and determines that the power feed device 93 that is the transmission source of the response signal is a power feed device being connectable for communication. The in-vehicle communication device 2 also displays the power feed device 93 being connectable for communication on the display device 205 of the in-vehicle communication device 2.

The in-vehicle communication device 2 identifies (selects) the feeding-end communication device 104 as a communication destination and performs the paring. When the pairing is completed, the in-vehicle communication device 2 displays an indication that the paring has been performed on the power feed device 93 that communicates with the vehicle 1 on the display device 205 of the in-vehicle communication device 2.

When the values in the power adjustment table 802 in FIG. 8 are stored in the power adjustment table 8B, the power feed device 9 being connectable for communication may be identified by reducing the transmission output of the inquiry signal in stages by using the equation (1) when the antenna 4c is used.

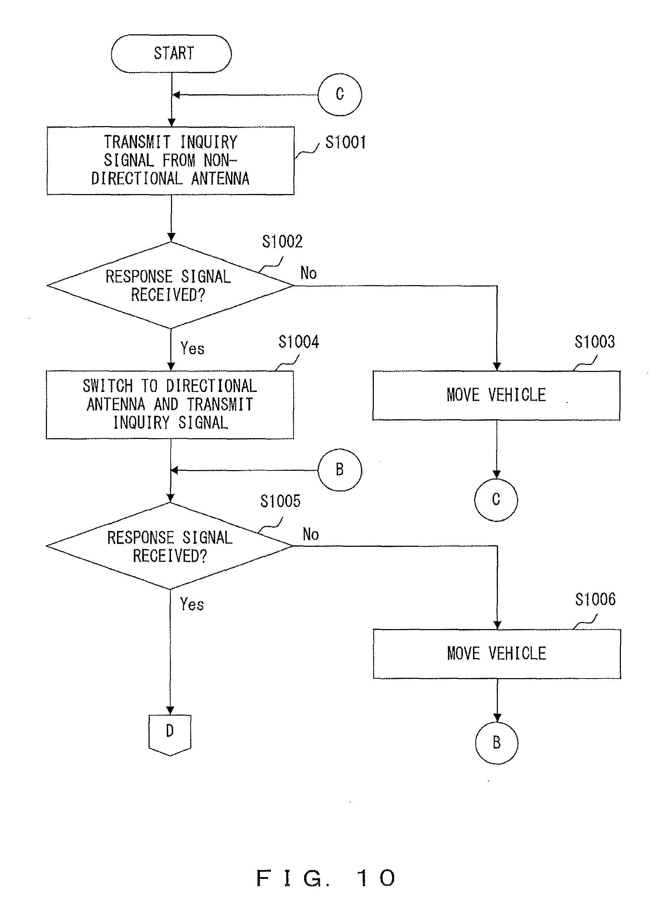

FIG. 10 is explained below.

FIG. 10 is a flowchart that describes the processing contents for identifying a communication destination in Embodiment 2.

The flowchart in FIG. 10 describes processing for identifying a communication destination explained by using FIG. 9. The following descriptions assume that the antenna 4b is a non-directional antenna, the antenna 4c is an antenna having directionality, and the power adjustment table 8B stores the values in the power adjustment table 801 in FIG. 8.

First, the in-vehicle communication device 2 of the vehicle 1 broadcasts an inquiry signal from the non-directional antenna 4b when an instruction to start the processing for identifying a communication destination is input by a user (1001). At that time the transmission output of the inquiry signal is at LEVEL 3, and the inquiry signal is transmitted in a wide range.

The in-vehicle communication device 2 determines whether or not a response signal has been received from the power feed device 9 (S1002).

When the in-vehicle communication device 2 determines that the response signal transmitted from the power feed device 9 has not been received (No in S1002), the in-vehicle communication device 2 performs the processing in S1001 after the user moves the vehicle 1 (S1003) in a direction of each power feed device 9. It should be noted that this move of the vehicle 1 by the user is performed arbitrarily by the user during the processing for identifying a communication destination illustrated in FIG. 10. The in-vehicle communication device 2 may be configured to execute the processing in S1001 after a certain period of time when the in-vehicle communication device 2 determines that the response signal transmitted from the power feed device 9 has not been received (No in S1002).

When the in-vehicle communication device 2 determines that the response signals that have been transmitted from one or more of the power feed devices 9 are received (Yes in S1002), the in-vehicle communication device 2 determines that the vehicle 1 is located within the power feed facility 400, switches the antenna to be used to the antenna 4c, and transmits an inquiry signal. The transmission output of the inquiry signal at that time is LEVEL 3 and the inquiry signal is transmitted in a wide range (S1004).

The in-vehicle communication device 2 determines whether or not a response signal has been received from the power feed device 9 (S1005).

When the in-vehicle communication device 2 determines that the response signal transmitted from the power feed device 9 has not been received (No in S1005), the in-vehicle communication device 2 performs the processing in S1001 after the user moves the vehicle 1 (S1006) in a direction of each power feed device 9. It should be noted that this move of the vehicle 1 by the user is performed arbitrarily by the user during the processing for identifying a communication destination illustrated in FIG. 10. The in-vehicle communication device 2 may be configured to execute the processing in S1001 after a certain period of time when the in-vehicle communication device 2 determines that the response signal transmitted from the power feed device 9 has not been received (No in S1002).

When the in-vehicle communication device 2 determines that the response signals that have been transmitted from one or more of the power feed devices 9 are received (Yes in S1005), the in-vehicle communication device 2 performs the processing in S605-S611 in FIG. 6.

It should be noted that when there is only one power feed device 9 being connectable for communication in the processing in S1002 and S1005, paring may be performed between the in-vehicle commutation device 2 in the vehicle 1 and the feeding-end communication device 10 in the power feed device 9 being connectable for communication at that point in time.

In Embodiment 2 described above, an inquiry signal is first transmitted by the non-directional antenna 4b. As a result, it is possible to determine whether or not the power feed device 9 is located within the communication area of the vehicle 1, and when a power feed device 9 is located within the communication area of the vehicle 1, it is possible to automatically shift to the processing for identifying the power feed device 9 that is a communication destination by using the antenna 4c having directionality.

In Embodiment 2 described above, an inquiry signal is transmitted by the non-directional antenna 4b, and one or more power feed devices 9 being connectable for communication are identified when a response signal transmitted from the power feed device 9 is received. When the identified power feed device 9 is located in a different direction from the direction of travel of the vehicle 1, the direction of the identified power feed device 9 is indicated in the display device 205 of the vehicle 1, and the user is guided to change the direction of travel of the vehicle 1 toward the direction of the identified power feed device 9. Afterwards, when the direction of travel of the vehicle 1 is turned in the direction of the identified power feed device 9, the processing may be shifted to processing to identify a power feed device 9 of the communication destination by using the antenna 4c having directionality. By doing so, the power feed device 9 can be efficiently captured within the main lobe of the radio waves to transmit the inquiry signal of the antenna 4c having directionality. It should be noted that an example of the determination of the location of the power feed device 9 is that when the vehicle 1 enters the power feed facility 400, the in-vehicle communication device 2 obtains map information in the power feed facility 400 by connecting to a server in the power feed facility 400. The in-vehicle communication device 2 may identify the location of the power feed device 9 by determining the power feed device 9 being connectable for communication from the identifier included in the response signal and by matching the map information in the power feed facility 400 that the vehicle 1 has. The location of the power feed device 9 may be determined on the basis of the reception intensity of the response signal received from the power feed device 9 and the direction from which the response signal is transmitted.

In addition, in Embodiment 2 described above, the paring of the in-vehicle communication device 2 in the vehicle 1 and the feeding-end communication device 10 in the power feed device 9 is performed by using the antenna 4c having directionality. In other words, because the antenna that transmits an inquiry signal has directionality, the power feed device 9 in which whether or not it is connectable for communication is searched is narrowed in advance by the antenna directionality. Therefore since Embodiment 2 can narrow the power feed devices 9 to those in the direction of travel of the vehicle 1 and can search for whether or not the power feed devices 9 can make communication connections with the vehicle 1, it is possible to reduce the processing load of the communication devices to identify the power feed device 9 of the communication destination.

In Embodiment 2, the non-directional antenna 4b may be omitted. In this case, when an instruction to start the processing for identifying the communication destination is input by a user, the processing is started from S1004 by using the antenna 4c having directionality.

[Embodiment 3]

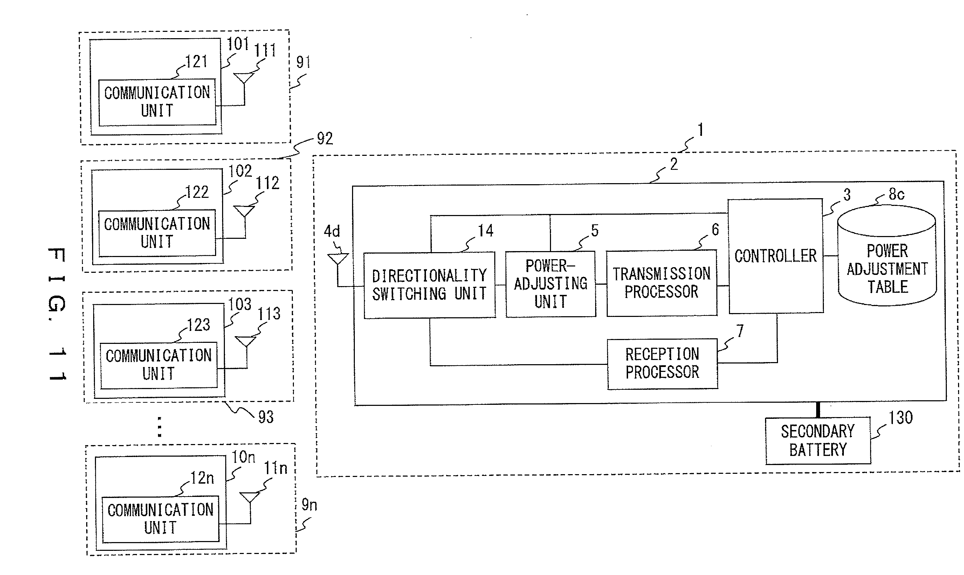

FIG. 11 is explained below.

FIG. 11 is a functional block diagram of an example of the power supply system of Embodiment 3.

In FIG. 11, the same functions as those in the in-vehicle communication device 2 according to Embodiment 2 described in FIG. 1 are assigned the same reference codes and the explanations are omitted. In addition, in FIG. 11, since the functions of the feeding-end communication devices 101-10n according to Embodiment 3 are the same as the functions of the feeding-end communication devices 101-10n according to Embodiment 1 described in FIG. 1, the same reference codes are assigned and the explanations are omitted.

The functions of the in-vehicle communication device 2 according to Embodiment 3 are explained below.

The in-vehicle communication device 2 according to Embodiment 3 has an antenna 4d that can switch the directionality and a directionality switching unit that switches the directionality of the antenna 4d, instead of the antenna 4b, the antenna 4c, and the antenna switching unit 13 in the in-vehicle communication device 2 according to Embodiment 2.

The antenna 4d can switch the directionality and broadcasts the inquiry signal input from the power-adjusting unit 6 to the power feed devices 91-9n. The antenna 4d, when it has directionality, is set so that the main lobe is oriented to the direction of travel of the vehicle 1 by the directionality switching unit 14. In addition, the antenna 4d, when it receives a response signal, outputs the received response signal to the reception processor 7. It should be noted that the antenna 4d may be used for transmission/reception of signals that are other than the inquiry signal and the response signal and are used for communications with the power feed device 9 or other devices.

The directionality switching unit 14 takes control of switching the directionality of the antenna 4d.

FIG. 2 is explained below.

FIG. 2 is an example of a hardware configuration of an example of the communication device.

In the hardware configuration of an example of the in-vehicle communication device 2 of Embodiment 3, the antenna 209 is the only difference from the hardware configuration of the communication device of Embodiment 2.

Therefore, only the antenna 209 is explained, and the other explanations are omitted.

The antenna 209 in the in-vehicle communication device 2 of Embodiment 3 is configured of an antenna that can switch the directionality and a directionality switching circuit that switches the directionality of the antenna. As a result, the antenna 209 in the in-vehicle communication device 2 switches the directionality of the antenna and transmits/receives wireless signals. The antenna 209 in the in-vehicle communication device 2 acts as the antenna 4d and the directionality switching unit 14 in FIG. 11. In addition, a coil for power feeding that the vehicle 1 has may be used as the antenna 4d in the in-vehicle communication device 2. It should be noted that as an example, when a reactive array antenna is employed, for example, as the antenna that can switch the directionality, a reactance value adjustment circuit may be used for the directionality switching circuit. In addition, in the antenna 209, the configuration is not limited in particular, as long as it is a combination of an antenna that can switch the directionality and a directionality switching circuit.

Operations of Embodiment 3 are explained below.

The configuration of Embodiment 3 is the configuration of Embodiment 2, but the antenna 4b is replaced with the antenna 4d in a non-directional state and the antenna 4c is replaced with the antenna 4d in a state of having directionality. The operations of Embodiment 3 are operations in which the directionality of the antenna is switched in the processing to identify the communication destination in Embodiment 2 instead of switching the antenna in the processing in S1004 of FIG. 10.

In Embodiment 3 described above, instead of the configuration of switching the antenna 4b and the antenna 4c in Embodiment 2, the same operations as those in Embodiment 2 are realized by changing the directionality of the antenna 4d. As a result, the same effect as that of Embodiment 2 can be obtained from a single antenna.

It should be noted that the processing is not limited to that of guiding a user after the paring (identifying a communication destination), but the processing to identify a communication destination may be performed after the user enters any one of the power feed areas 401-40n.

For example, in Embodiment 1, the in-vehicle communication device 2, after it determines that the response signal transmitted from the power feed device 9 is received (Yes in S603), displays power feed devices being connectable for communication on the display device 205 in the in-vehicle communication device 2, and the user arbitrarily makes a selection of the displayed power feed devices being connectable for communication and enters any one of the power feed areas 401-40n. Afterwards, the processing in S602-S611 in FIG. 6 is performed. Because the feeding-end communication device 10 corresponding to the power feed area 40 that the user selected is the closest to the vehicle, as a result of performing the processing in S602-S611, the feeding-end communication device 10 corresponding to the power feed area 40 that the user selected is identified as the communication destination.

For example, in Embodiment 2, the in-vehicle communication device 2, after it determines that the response signal transmitted from the power feed device 9 is received (Yes in S1002), displays power feed devices being connectable for communication on the display device 205 in the in-vehicle communication device 2, and the user arbitrarily makes a selection of the displayed power feed devices being connectable for communication and enters any one of the power feed areas 401-40n. Afterwards, the antenna is switched to a directional antenna and an inquiry signal is transmitted (S1004). Because the feeding-end communication device 10 corresponding to the power feed area 40 that the user selected is the closest to the vehicle, as a result of performing the processing in S1004 and the subsequent steps, the feeding-end communication device 10 corresponding to the power feed area 40 that the user selected is identified as the communication destination.

Furthermore, the orientation of the main lobe of the antenna having directionality is not limited to the direction of travel of the vehicle 1.

**Claims**

1. An in-vehicle communication device comprising:

> a transmission/reception unit that wirelessly transmits/receives a signal;
> a power-adjusting unit that adjusts a level of a transmission output of the signal transmitted from the transmission/reception unit;
> a controller unit that

>> transmits an inquiry signal from the transmission/reception unit to an unspecified number of power feed devices to confirm reception,
>> when a response signal is received from a plurality of power feed devices in response to the inquiry signal, controls the power-adjusting unit and repeatedly transmits the inquiry signal while reducing the level of the transmission output of the inquiry signal in stages, and
>> when the response signal is received from a single power feed device, performs authentication processing to transmit/receive a signal to/from a communication device that the single power feed device has.

2. The in-vehicle communication device according to claim 1, wherein the transmission/reception unit is an antenna having directionality in a direction of travel of the vehicle.

3. The in-vehicle communication device according to claim 1, wherein
the transmission/reception unit is an antenna that can switch directionality, and
the controller unit controls the antenna so as to orient directionality toward the direction of travel of the vehicle when the controller unit enters a power feed facility.

4. The in-vehicle communication device according to claim 1, wherein
the transmission/reception unit is an antenna that can switch directionality, and
the controller unit controls to make the antenna non-directional, transmits the inquiry signal from the antenna, and when the response signal is received from one or more power feed devices, controls the antenna to orient directionality toward a direction of travel of the vehicle.

5. The in-vehicle communication device according to claim 1, wherein
the transmission/reception unit includes a non-directional antenna and an antenna having directionality, and
the controller unit transmits the inquiry signal from the non-directional antenna, and transmits the inquiry signal from the antenna having directionality when the response signal is received from one or more power feed devices.

6. A communication method, wherein a computer in an in-vehicle communication device performs:

generating an inquiry signal to confirm reception with a power feed device;
transmitting the inquiry signal to an unspecified number of power feed devices via a transmission/reception unit that wirelessly transmits/receives a signal;
when a response signal is received from a plurality of power feed devices in response to the inquiry signal, controlling the power-adjusting unit that adjusts a level of a transmission output of a signal transmitted from the transmission/reception unit, and repeatedly transmitting the inquiry signal while reducing the level of the transmission output of the inquiry signal in stages; and
when the response signal is received from a single power feed device, performing authentication processing to transmit/receive a signal to/from a communication device that the single power feed device has.

F I G. 1

F I G. 2

POWER ADJUSTMENT TABLE 8A

_301_

| OUTPUT LEVEL | TRANSMISSION OUTPUT VALUE [W] |
|---|---|
| LEVEL 1 | A |
| LEVEL 2 | B |
| LEVEL 3 | C |

_302_

| OUTPUT SETTING VALUE | POWER VALUE [W] |
|---|---|
| UPPER-LIMIT VALUE | D |
| DIFFERENCE POWER VALUE | E |
| LOWER-LIMIT VALUE | F |

F I G. 3

400

FEEDING-END
COMMUNICATION
DEVICE

101

91

111

401

411

LEVEL 3

FEEDING-END
COMMUNICATION
DEVICE

102

92

112

402

412

LEVEL 2

FEEDING-END
COMMUNICATION
DEVICE

103

93

113

403

413

LEVEL 1

4a

2

1

FEEDING-END
COMMUNICATION
DEVICE

104

94

114

404

414

IN-VEHICLE
COMMUNICATION

FEEDING-END
COMMUNICATION
DEVICE

105

95

115

405

415

FEEDING-END
COMMUNICATION
DEVICE

10n

9n

11n

40n

41n

F I G. 4

DISPLAY DEVICE 205 IN IN-VEHICLE
COMMUNICATION DEVICE 2

501

SEARCH RESULT FOR
POWER FEED DEVICE THAT CAN
MAKE COMMUNICATION CONNECTION:
· POWER FEED DEVICE 92
· POWER FEED DEVICE 93
· POWER FEED DEVICE 94
· POWER FEED DEVICE 95

502

SEARCH RESULT FOR
CONNECTABLE POWER FEED DEVICE:
· POWER FEED DEVICE 94

503

· CONNECTED WITH POWER
FEED DEVICE 94

DISPLAY DEVICE 205 IN FEEDING-END
COMMUNICATION DEVICE 10

504

· CONNECTED WITH VEHICLE 1

F I G. 5

START

S601

VEHICLE
ENTERED IN POWER
FEED FACILITY?

No

Yes

A

TRANSMIT INQUIRY SIGNAL
TO WIDE RANGE S602

S603

RESPONSE SIGNAL
RECEIVED?

No

S604

MOVE VEHICLE

D

Yes

A

S605

FROM
SINGLE POWER

No

S606

REDUCTION
IN TRANSMISSION OUTPUT
POSSIBLE?

No

Yes

S611

AUTOMATICALLY
PERFORM PAIRING

Yes

S607

REDUCE TRANSMISSION
OUTPUT BY ONE LEVEL

B

A

S609

PAIRING PERFORMED?

No

Yes

S608

MANUAL PARING
PROCESSING

START BATTERY CHARGE S610

END

B

F I G. 6

F I G. 7

POWER ADJUSTMENT TABLE 8B

_801

| OUTPUT LEVEL α | TRANSMISSION OUTPUT VALUE α [W] | OUTPUT LEVEL β | TRANSMISSION OUTPUT VALUE β [W] |
|---|---|---|---|
| LEVEL 3 | C | LEVEL 1 | A |
| | | LEVEL 2 | B |
| | | LEVEL 3 | C |

_802

| OUTPUT LEVEL α | TRANSMISSION OUTPUT VALUE α [W] | OUTPUT SETTING VALUE β | POWER VALUE β [W] |
|---|---|---|---|
| LEVEL 3 | C | UPPER-LIMIT VALUE | D |
| | | DIFFERENCE POWER VALUE | E |
| | | LOWER-LIMIT VALUE | F |

F I G. 8

F I G. 9

START

C

TRANSMIT INQUIRY
SIGNAL FROM NON-
DIRECTIONAL ANTENNA — S1001

S1002

RESPONSE SIGNAL
RECEIVED? — No

Yes — S1004

SWITCH TO DIRECTIONAL
ANTENNA AND TRANSMIT
INQUIRY SIGNAL

B

S1003

MOVE VEHICLE

C

S1005

RESPONSE SIGNAL
RECEIVED? — No

Yes

D

S1006

MOVE VEHICLE

B

F I G.  1 0

F I G. 1 1

## INTERNATIONAL SEARCH REPORT

| International application No. |
|---|
| PCT/JP2013/067987 |

A.　CLASSIFICATION OF SUBJECT MATTER

*H04B1/59*(2006.01)i, *B60L3/00*(2006.01)i, *B60L11/18*(2006.01)i, *H01Q3/28* (2006.01)i, *H02J7/00*(2006.01)i, *H02J17/00*(2006.01)i, *H04B1/04*(2006.01)i, *H04B1/40*(2006.01)i, *H04B7/10*(2006.01)i

According to International Patent Classification (IPC) or to both national classification and IPC

B.　FIELDS SEARCHED

Minimum documentation searched (classification system followed by classification symbols)

H04B1/59, B60L3/00, B60L11/18, H01Q3/28, H02J7/00, H02J17/00, H04B1/04, H04B1/40, H04B7/10

Documentation searched other than minimum documentation to the extent that such documents are included in the fields searched

　　Jitsuyo Shinan Koho　　　　1922–1996　　Jitsuyo Shinan Toroku Koho　　1996–2013
　　Kokai Jitsuyo Shinan Koho　　1971–2013　　Toroku Jitsuyo Shinan Koho　　1994–2013

Electronic data base consulted during the international search (name of data base and, where practicable, search terms used)

C.　DOCUMENTS CONSIDERED TO BE RELEVANT

| Category* | Citation of document, with indication, where appropriate, of the relevant passages | Relevant to claim No. |
|---|---|---|
| Y | JP 2012-019636 A  (Denso Corp.), 26 January 2012 (26.01.2012), paragraphs [0060] to [0067]; fig. 3, 4 & US 2012/0007554 A1　　& DE 102011078836 A & FR 2962605 A　　　　　& CN 102332736 A | 1-6 |
| Y | JP 2003-506995 A  (Telefonaktiebolaget LM Ericsson (publ)), 18 February 2003 (18.02.2003), paragraphs [0023] to [0025], [0040], [0042]; fig. 2B, 6 & US 6323775 B1　　　　　& EP 1203435 A & WO 2001/011752 A1　　& DE 60025625 D & AU 6989700 A　　　　　& AT 316305 T & CN 1377518 A　　　　　& MY 116816 A | 1-6 |

☒　　Further documents are listed in the continuation of Box C.　　☐　　See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered    to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 　　16 August, 2013 (16.08.13) | 　　27 August, 2013 (27.08.13) |

| Name and mailing address of the ISA/ | Authorized officer |
|---|---|
| 　　Japanese Patent Office | |
| Facsimile No. | Telephone No. |

Form PCT/ISA/210 (second sheet) (July 2009)

**INTERNATIONAL SEARCH REPORT**

International application No.

PCT/JP2013/067987

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2011-503992 A  (LDL Technology), 27 January 2011 (27.01.2011), paragraphs [0020], [0025] to [0027]; fig. 1 & US 2010/0231370 A1     & EP 2219889 A & WO 2009/068808 A1     & FR 2923414 A & FR 2923414 A1 | 1-6 |
| Y | JP 2011-250654 A  (Amano Co., Ltd.), 08 December 2011 (08.12.2011), paragraphs [0047], [0054] to [0059]; fig. 6, 7 (Family: none) | 2-4 |
| Y | JP 2004-180037 A  (NEC Infrontia Corp.), 24 June 2004 (24.06.2004), paragraphs [0015] to [0017] (Family: none) | 4,5 |

Form PCT/ISA/210 (continuation of second sheet) (July 2009)

**REFERENCES CITED IN THE DESCRIPTION**

**Patent documents cited in the description**

- JP 2004304542 A

- JP 2011081784 A